Europäisches Patentamt

European Patent Office

Office européen des brevets

(19)

(11) Numéro de publication: **0 013 247**
**B1**

(12) **FASCICULE DE BREVET EUROPEEN**

(45) Date de publication du fascicule du brevet: **09.02.83**

(51) Int. Cl.³: **G 01 N 15/02, C 02 F 1/52**

(21) Numéro de dépôt: **79401074.4**

(22) Date de dépôt: **28.12.79**

(54) Procédé pour mesurer le volume de matières en suspension dans un liquide avec application, notamment, à la détermination automatique de la qualité d'une eau.

(30) Priorité: **28.12.78 FR 7836742**
**13.07.79 FR 7918188**

(43) Date de publication de la demande:
**09.07.80 Bulletin 80/14**

(45) Mention de la délivrance du brevet:
**09.02.83 Bulletin 83/6**

(84) Etats contractants désignés:
**BE CH DE GB IT SE**

(56) Documents cités:
**FR - A - 2 195 907**
**FR - A - 2 266 881**
**US - A - 3 067 133**
**US - A - 3 731 807**

**ISA TRANSACTIONS, vol. 12, no. 1, 1973, Ed. ISA,**
**Pittsburgh, Ohio, US**
**P. SHOFNER et al.: "Design considerations for particulate instrumentation by Laser light scattering (PILLS) systems", pages 57—61**

(73) Titulaire: **OMNIUM D'ASSAINISSEMENT**
**Le Doublon 11 Avenue Dubonnet**
**F-92407 Courbevoie Cedex (FR)**
(73) Titulaire: **SOCIETE DES APPLICATIONS BIOLOGIQUES DU LASER A L'ENVIRONNEMENT**
**Sarl française**
**18, rue des Tournelles**
**F-75004 Paris (FR)**

(72) Inventeur: **Moreaud, Henri**
**3 square de Tocqueville**
**F-78150 le Chesnay (FR)**
Inventeur: **Meric, Jean-Paul**
**10, rue du Docteur Roux**
**F-75015 Paris (FR)**

(74) Mandataire: **Cuer, André**
**CABINET CUER 30, rue de Léningrad**
**F-75008 Paris (FR)**

(56) Documents cités:
**JOURNAL OF WATER POLLUTION CONTROL FEDERATION, vol. 47, no. 5, mai 1975**
**J. BUSBY et al.: "Dynamic modeling and control strategies for the activated sludge process", pages 1055—1080.**

Courier Press, Leamington Spa, England.

Procédé pour mesurer le volume de matières en suspension dans un liquide avec application, notamment, à la détermination automatique de la qualité d'une eau.

La présente invention a trait au domaine de la détermination du volume de particules en suspension dans un liquide et, notamment, du contrôle de fonctionnement desinstallations de clarification de liquides. Elle concerne tout spécialement un procédé de mesure du volume de particules inférieures à une dimension prédéterminée et l'application de ce procédé, entre autres usages, à la mesure automatique de la qualité d'une eau épurée permettant de déterminer les quantités optimales de réactifs floculants à mettre en oeuvre pour la coagulation-floculation d'une eau usée.

On met en oeuvre dans de nombreuses industries, par exemple métallurgique, chimique, pharmaceutique, agro-alimentaire, ou encore dans le contrôle de la pollution, un grand nombre d'opérations ayant trait à la dissolution, à la précipitation ou à la floculation de particules solides. Ces opérations nécessitent souvent la mesure du volume des matières en suspension dans un liquide.

On sait, par exemple, que dans les opérations de clarification des liquides contenant en suspension des particules trop fines pour être filtrées ou décantées, il est en général nécessaire de prévoir une étape de floculation au moyen d'un réactif approprié, comme par exemple du sulfate d'aluminium ou du chlorure ferrique dans le cas de l'eau. Toutefois, il est pratiquement impossible de prévoir la dose exacte de coagulant à ajouter et, si les caractéristiques physico-chimiques du liquide à traiter (par exemple une eau usée) changent au cours du temps, notamment dans le cas de déversements industriels ou d'une dilution consécutive à un orage, la dose choisie pour le réactif n'est plus appropriée et tout le traitement se trouve compromis.

Pour pallier cet inconvénient, divers moyens ont été utilisés ou préconisés.

Par exemple, on a proposé des procédés permettant de rendre automatique le dosage optimal de réactif floculant à ajouter à une eau brute à traiter, en remplaçant ainsi les essais de laboratoires connus sous la nom de "Jar-Test".

Selon un dispositif dénommé "Autofloc", on mesure la turbidité de l'eau, avec déclenchement de signaux de régulation de dosage de floculant, en se basant sur une relation de correspondance entre l'accroissement de turbidité dans la phase de formation des flocs et la turbidité résiduelle après décantation. Or, plusieurs auteurs ont montré expérimentalement qu'il exist un décalage non constant entre la dose de réactif qui donne le maximum de turbidité au liquide floculé et celle qui donne, après floculation-décantation, le liquide le plus clarifié; ce décalage entraîne en pratique un surdosage de réactif.

Conformément à une autre technique, on a proposé de contrôler la floculation et d'ajuster automatiquement la quantité nécessaire de floculant en mesurant optiquement le volume des flocs par diffraction d'un faisceau lumineux produit par un laser. L'emploi d'un signal laser apporte un progrès par rapport au turbidimètre tel que celui précité car le signal tient compte des différentes tailles des particules et se trouve peu sensible à la couleur de l'eau. Toutefois, l'étude des flocs ne constitue pas le paramètre le plus intéressant pour le contrôle de la floculation et, par ailleurs, le procédé ne permet pas de mesurer le volume des matières en suspension dans un liquide dont la granulométrie est inférieure à une valeur prédéterminée. (Certificat d'Utilité France N° 74.12261 publié sous N° FR—A—2.266.881.)

L'invention a pour but de surmonter les difficultés énoncées ci-dessus et vise, par une mesure de volume de matières en suspension (MES), à déterminer de façon précise et rapide la quantité de particules de faible taille dans un milieu liquide. Elle permet notamment, entre autres applications, un contrôle permanent de la floculation dans une station d'épuration d'eau brute par mesure de la qualité de l'eau obtenue après floculation et dans laquelle les particules surnageantes ont une taille généralement inférieure à 10 microns.

Selon sa définition générale, le procédé selon l'invention pour la mesure de volume de MES de diamètre moyen d inférieur à dix microns est essentiellement caractérisé en ce que, dans la mesure, á l'aide de cellules photoélectriques, du flux diffracté dans au moins deux fenêtres, la valeur limite de l'angle de diffraction s pour la fenêtre la plus proche du rayon central doit satisfaire, pour un laser à gaz de type hélium-néon, à la relation:

$$s = \frac{0,8}{d}$$

s exprimé en radians et d en microns, les signaux électriques F et F' issus desdites cellules photoélectriques étant ensuite pondérés et additionnés pour donner un signal final proportionnel au volume $V_d$ des matières en suspension conformément à la relation: $V_d = aF + a'F'$; a et á étant les coefficients de pondération desdits signaux.

Les coefficients de la pondération peuvent être déterminés par le calcul. Cependant, de manière préférée, ils sont déterminés par l'expérience en utilisant des suspensions de granulométrie aussi diverses que possible. Pour chaque échantillon, on mesure les signaux fournis par les cellules photoélectriques, ainsi que la volume de matières en suspension. Il est alors possible de calculer les coefficients de pondération par une régression linéaire. L'analyse de la variance des coefficients et du volume permet de vérifier si les fenêtres sont bien choisies.

En pratique, le liquide à étudier est avantageusement amené en continu entre deux lames transparentes et la diffraction propre des lames est mesurée périodiquement et utilisée pour corriger la valeur obtenue.

De préférence, un flux d'un liquide de protection est amené en continu au contact desdites lames. Ce flux permet d'éviter que les matières en suspension ne se déposent sur les lames et faussent ainsi la mesure.

Avantageusement, un filtre monochromatique perméable uniquement à la lumière du laser est disposé devant lesdites cellules photoélectriques et le faisceau laser est modulé, le signal électrique retenu étant celui de la fréquence de modulation du laser.

Selon un mode de réalisation préféré, on localise le faisceau lumineux du laser préalablement à sa traversée de l'échantillon à étudier. Il est ainsi possible d'augmenter la précision de la mesure.

Le procédé tel que défini ci-dessus se prête à de nombreuses applications chaque fois que l'on désire disposer, comme critère d'un milieu fluide donné, du volume total des particules suspendues dans un liquide. Toutefois, il est tout spécialement adapté à la détermination de la qualité d'une eau par mesure de son aptitude à la floculation en vue de fixer les quantités juste nécessaires d'un réactif floculant à mettre en oeuvre pour obtenir la coagulation d'une eau brute.

Conformément à l'application susvisée, on prélève, en amont d'une station d'épuration, l'eau brute à traiter en la faisant passer, simultanément à des quantités dosées de réactifs floculants, dans un système de coagulation-décantation où la décantation des flocs s'effectue en quelques minutes et l'on mesure en continu le volume de particules résiduelles en suspension dans l'eau séparée des flocs au moyen de la diffraction optique, par lesdites particules, du faisceau lumineux à laser susvisé, la lumière diffractée convertie en un signal électrique en relation directe avec le volume des particules que l'on compare à des courbes d'étalonnage.

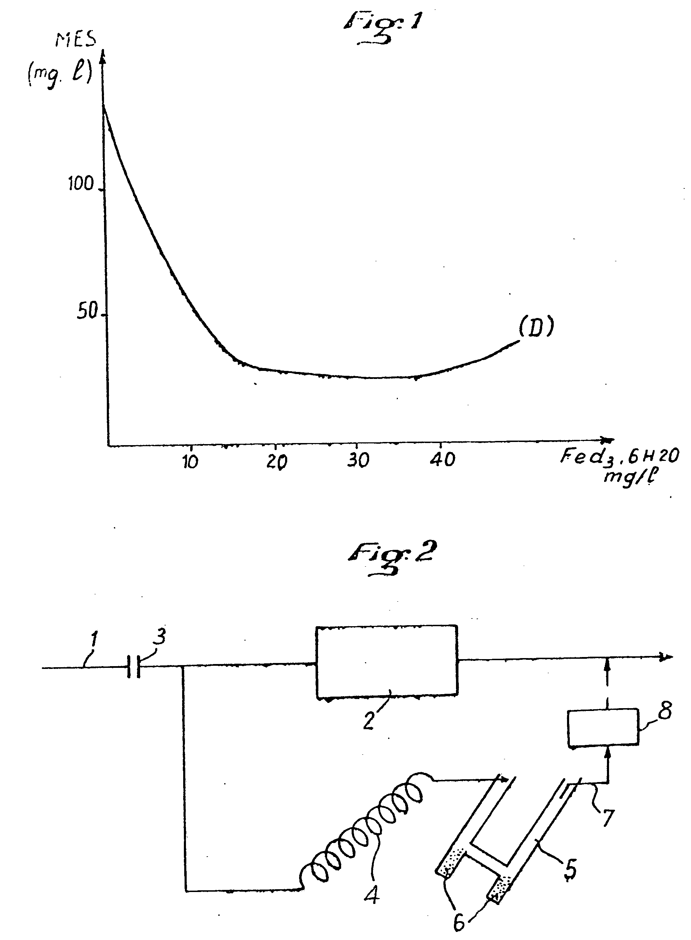

Grâce à des séries d'essais systématiques on a, en effet, pu constater que: une simple agitation mécanique permettait d'éliminer, après décantation, la quasi totalité des particules supérieures à 20 microns; l'ajout de réactifs chimiques améliorait les résultats et la pollution résiduelle du liquide surnageant, exprimée par diverses mesures (MES: matières en suspension; DTO: demande totale en oxygène; turbidité . . .), passait par un minimum lorsqu'on augmente la dose de réactif. C'est pour les MES que cet optimum est le plus sensible, comme l'illustre la courbe (D) de la figure 1 annexée. Au voisinage de cet optimum, la pollution résiduelle est constituée par des particules de taille inférieure à 10 microns et par des molécules dissoutes. Ces essais ont permis de conclure que la mesure des matières en suspension, qui d'ailleurs est un critère officiel de qualité d'une eau usée après traitement, constituait le paramètre le plus significatif permettant d'optimiser un procédé de contrôle de la floculation d'une eau. Grâce à l'invention, on peut parvenir à une détermination précise et rapide, inférieure à 15 minutes, de ces matières en suspension (MES).

L'invention sera mieux comprise par la description détaillée de modes de réalisation non limitatifs conformément aux exemples qui suivent.

### Exemple 1

Mesure du volume d'une suspension avec un appareil conforme au procédé de l'invention.

Comme on peut le voir sur le schéma de principe de la figure 5, la lame liquide 9 de l'échantillon dont on désire mesurer le volume des matières en suspension passe entre deux lames transparentes 10 et 11 et se trouve éclairée par le faisceau laser 12. Afin de protéger les lames 10 et 11 des matières en suspension contenues dans le fluide 9 on prévoit un balayage 13 de liquide propre entre le fluide 9 porteur des matières en suspension et les lames transparentes 10 et 11.

A la traversée de l'échantillon, le faisceau 12 est diffracté en un faisceau 14 dont le flux est mesuré dans deux fenêtres de diffraction à l'aide de cellules photoélectriques 15 et 16. Les signaux électriques F et F' issus de ces deux cellules sont alors pondérés et additionnés pour donner un signal proportionnel au volume des matières en suspension d'une granulométrie inférieure à une valeur prédéterminée d, de façon à satisfaire à la relation, $V_d = aF + a'F'$, a et a' étant les coefficients de pondération desdits signaux.

Par exemple, pour mesurer le volume de matières en suspension de diamètre inférieur à 20 microns, quelle que soit la granulométrie de l'ensemble desdites matières, on choisit deux fenêtres de diffraction dont les valeurs des angles de diffraction s, par rapport au rayon central incident 17, sont tels que: $S_1 = 0,04$, $S_2 = 0,10$ et $S_3 = 0,30$ ces valeurs étant exprimées en radians.

La précision avec laquelle le volume est obtenu s'accroît lorsque le nombre de fenêtres augmente et elle décroît lorsque les variations relatives des différentes populations granulométriques sont importantes. Ces variations sont cependant faibles et les limites angulaires des fenêtres de diffraction sont choisies en relation avec les populations granulométriques. Cette relation peut s'écrire, si l'on utilise par exemple un laser hélium-néon (pour lequel $\lambda = 0,6328$ microns),

$$s = \frac{0,8}{d}$$

où *d* est le diamètre de la particule en micron et *s* la limite angulaire en radian.

Sur la figure 5, l'échantillon est représenté sous la forme d'un flux comprise entre deux lames transparentes. Dans ces conditions, il faut tenir compte de la diffraction des interfaces et mesurer périodiquement cette diffraction en absence d'échantillon pour corriger la valeur obtenue. Cependant, l'échantillon peut également se présenter sous la forme d'un jet.

L'appareil peut être rendu insensible aux parasites par une modulation du faisceau laser obtenue par un disque tournant à vitesse constante et percé de trous. Par ailleurs, des filtres optiques placés devant les cellules peuvent ne laisser passer que la lumière ayant la longueur d'onde du laser. Cet agencement permet d'utiliser l'appareil à l'air libre.

### Exemple 2

Application du procédé de l'invention au contrôle en continu de la floculation d'une eau brute de station d'épuration.

Pour mettre en oeuvre l'application susvisée, on utilise avantageusement l'installation schématisée sur le diagramme de principe de la figure 2. Sur le circuit 1 d'eau brute parvenant à la station d'épuration 2 et en aval du débitmètre 3, on incorpore en dérivation au moins un système de coagulation-décantation constitué par la combinaison d'un tube en spirale 4 et d'un décanteur lamellaire 5. En pratique, on dispose en parallèle plusieurs de ces systèmes, par exemple trois ou quatre, qui fonctionnent chacun avec une dose déterminée de réactif floculant de façon à pouvoir élaborer à l'aide de divers points de mesure les courbes établissant la relation entre le signal du laser et la dose de coagulant. Les flocs s'accumulant en 6 dans le décanteur lamellaire, le liquide surnageant 7 traverse le diffractomètre à laser 8 où les signaux électriques permettent de déterminer le volume des particules et la quantité de réactif juste nécessaire à la floculation.

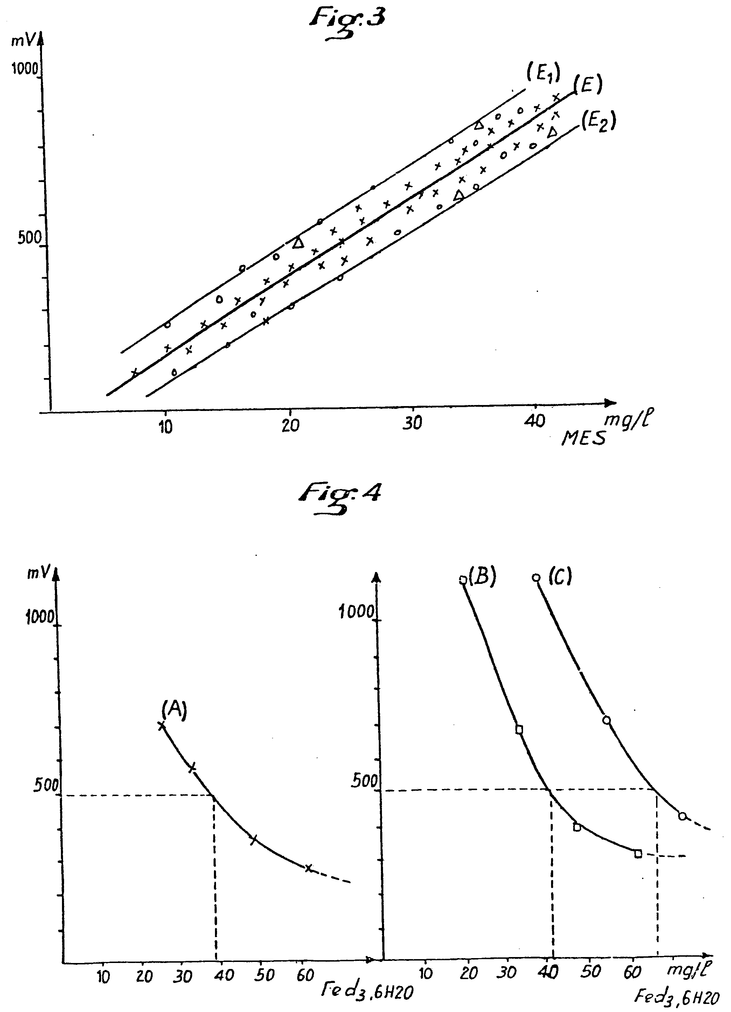

Pour l'expérimentation proprement dite on a tout d'abord entrepris l'étalonnage du diffractomètre à laser en travaillant sur plusieurs eaux urbaines floculées par du chlorure ferrique (Fe-cl 3, 6 H$_2$O) et en déterminant par pesée les quantités de matières solides restant en suspension (MES) dans le liquide surnageant après floculation, ceci pour chaque signal exprimé en millivolts (mV) du diffractomètre. Comme l'indique la figure 3 on a obtenu ainsi toute une série de points qui ont permis de construire la courbe d'étalonnage (E) de pente correspondant à un rapport signal laser (mV)/concentration (en mg(l) en MES sensiblement égal à 30. Comme on peut le voir sur la figure précitée, la dispersion des points de mesure autour de la courbe (E) est représentée par les droites extrêmes (E$_1$) et (E$_2$); le coefficient de corrélation est de l'ordre de 0,93 ce qui peut être considéré comme très correct dans ce domaine de mesures.

Muni de cette courbe de comparaison, on a entrepris de nombreuses séries d'essais de floculation en continu à l'entrée d'une station d'épuration d'eaux brutes (en l'occurence la station de COLOMBES, près de PARIS). La longueur d'onde de travail du pulvérimètre à laser était de 0,632 microns. Par ailleurs, on a utilisé en parallèle quatre coagulomètres tels qu'illustrés sur la figure 2, avec les caractéristiques suivantes:

— volume du tube helicoïdal: 500 ml (diamètre 8 mm)

— volume du décanteur lamellaire: 500 ml

— inclinaison du décanteur par rapport à l'horizontale: 55 degrés environ

— temps de séjour variant de 7 à 15 minutes (en général voisin de 10 minutes).

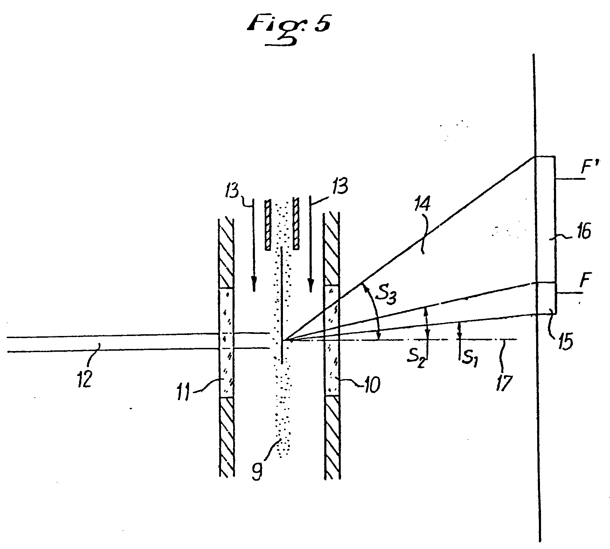

Pour chaque type d'eau les essais consistaient à introduire des doses croissantes de réactifs floculants afin de déterminer la relation entre la dose de coagulant et la qualité de l'eau traitée à l'instant considéré. A partir de cette relation il est aisé de fixer la dose qu'il convient d'appliquer en fonction de l'objectif recherché, c'est-à-dire soit un optimum technico-économique, soit une concentration de 30 mg/l en MES, laquelle correspond à la norme de rejet pour les eaux urbaines. A titre d'exemple illustratif on a reproduit sur la figure 4 les tracés des courbes obtenues sur une eau brute parvenant à la station de Colombes le même jour aux différentes périodes suivantes de la journée:

11 heures: courbe (A)

15 heures: courbe (B)

19 heures: courbe (C)

On peut constater ainsi la très grande variation de dose de réactif floculant (ici chlorure ferrique) à ajouter à une eau sur une période relativement courte. Pour un signal au diffractomètre laser de 500 mV cette dose passait de 37 mg/l de FeCl$_3$, 6 H$_2$O à 11 heures; à 42 mg/l vers 15 heures et à 66 mg/l à 19 heures.

En travaillant en parallèle sur une installation industrielle de traitement d'eaux usées urbaines, on a trouvé une excellente concordance entre les résultats obtenus à partir de ladite installation et ceux qui ont permis le tracé des courbes susvisées.

Bien entendu, des centaines d'autres essais systématiques en continu ont été effectués et ont permis de constater que, le temps moyen d'établissement d'une courbe type A, B ou C par quatre points étant d'environ 12 à 15 minutes, il était possible d'ajuster en un temps très court la dose de réactif floculant exactement nécessaire sur un débit continu d'eau brute à traiter. Ainsi le procédé permet d'éviter tout gaspillage de réactif et de se placer en permanence dans une zone hors des domaines de sous-dosages ou surdosages en floculants. Ceci tant pour des eaux usées, d'égouts ou industrielles, que pour des eaux à potabiliser, telles que eaux de surface ou autres.

## Revendications

1. Procédé pour mesurer, à l'aide de cellules photoélectriques, le volume de matières en suspension dans un liquide et dont le diamètre moyen d des particules est inférieur à dix microns, par éclairage dudit liquide au moyen d'un faisceau laser qui est diffracté à la sortie de l'échantillon dans au moins deux fenêtres, le procédé étant caractérisé en ce que la valeur limite de l'angle de diffraction s pour la fenêtre la plus proche du rayon central doit satisfaire, pour un laser à gaz de type hélium-néon, à la relation:

$$s = \frac{0,8}{d}$$

s exprimé en radians et d en microns, les signaux électriques F et F' issus desdites cellules photoélectriques étant ensuite pondérés et additionnés pour donner un signal final proportionnel au volume V des matières en suspension conformément à la relation: $V_d = aF + a'F'$; a et a' étant les coefficients de pondération desdits signaux.

2. Procédé selon la revendication 1, caractérisé en ce que ledit liquide est amené en continu entre deux lames transparentes, et en ce que la diffraction propre des lames est mesurée périodiquement et utilisée pour corriger la valeur obtenue.

3. Procédé selon l'une quelconque des revendications 1 et 2, caractérisé en ce qu'un filtre monochromatique perméable uniquement à la lumière du laser est disposé devant lesdites cellules photoélectriques.

4. Procédé selon l'une quelconque des revendications 1 à 3, caractérisé en ce que l'on focalise ledit faisceau préalablement à sa traversée dudit échantillon.

5. Procédé de détermination automatique de la qualité d'une eau par mesure de son aptitude à la floculation en vue de fixer les quantités justes nécessaires d'un réactif floculant à mettre en oeuvre pour obtenir la coagulation d'une eau brute, la détermination étant caractérisée en ce que l'on prélève, en amont d'une station d'épuration, de l'eau brute à traiter en la faisant passer, simultanément à des quantités dosées de réactifs, dans un système de coagulation-décantation ou la décantation des flocs s'effectue en quelques minutes, et l'on mesure selon l'une quelconque des revendications 1 à 4, en continu, le volume de particules résiduelles en suspension dans l'eau séparée des flocs et de taille moyenne inférieure à 10 microns, à l'aide de la diffraction optique, par lesdites particules, dudit faisceau lumineux à laser, le signal électrique issu desdites cellules photoélectriques étant en relation directe avec le volume des particules que l'on compare à des courbes d'étalonnage.

6. Procédé selon la revendication 5, caractérisée en ce que le dispositif de mise en oeuvre de la détermination automatique de la qualité de l'eau comprend, installé en dérivation sur le circuit d'alimentation en eau brute d'une station d'épuration: a) un système de coagulation-décantation constitué par au moins un ensemble d'un tube hélicoïdal alimenté en eau brute et an réactif floculant et d'un décanteur lamellaire; et b) un diffractomètre à laser, des moyens étant prévus pour prélever en continu le liquide décanté puis le faire passer dans le diffractomètre ainsi que pour enregistrer les signaux électriques obtenus, la dose exacte de réactif floculant ainsi déterminée à un instant donné étant alors introduite dans le circuit d'alimentation.

7. Procédé selon la revendication 6 caractérisée en ce que le système de coagulation-décantation comprend au moins trois desdits ensembles disposés en parallèle, fonctionnant chacun avec une dose déterminée de réactif floculant de façon à pouvoir construire, par un nombre suffisant de points de mesure, les courbes établissant la relation entre le signal du laser et la dose de coagulant à introduire exactement.

## Patentansprüche

1. Meßverfahren unter Anwendung fotoelektrischer Zellen zur Bestimmung des Volumens in einer Flüssigkeit aufgeschwemmter, einen mittleren Durchmesser (d) von 10 $\mu$m nicht übersteigender Teilchen durch Aushellung der Flüssigkeit durch einen Laserstrahl, der beim Verlassen der Probe in mindestens zwei Fenster hinein gebeugt wird, dadurch gekennzeichnet, daß der Grenzwert Ablenkwinkels (s) bei dem dem Mittelstrahl am nächsten liegenden Fenster und bei Anwendung eines Heliumneonlasers der Gleichung s = 0,8/d entspricht, worin s in Bogenmaß und d in $\mu$m gemessen sind, daß die elektrischen Ausgangssignale F und F' der fotoelektrischen Zellen sodann gewichtet und zusammenaddiert werden, um ein dem Volumen V der aufgeschwemmten Stoffe gemäß der Beziehung $V_d = aF + a'F'$ proportionales Endsignal zu ergeben; wobei a und a' die Wichtungskoeffizienten der Signale darstellen.

2. Verfahren nach Anspruch 1, dadurch gekennzeichnet, daß man die Flüssigkeit kontinuierlich zwischen zwei durchsichtigen Platten fließen läßt und daß die Eigenbeugung der Platten wiederholt gemessen wird, um einen Korrekturwert zu erzielen.

3. Verfahren nach Anspruch 1 oder Anspruch 2, gekennzeichnet durch ein monochromes Filterelement, das nur das Laserlicht durchläßt und den fotoelektrischen Zellen vorgeschaltet ist.

4. Verfahren nach einem der Ansprüche 1 bis 3, dadurch gekennzeichnet, daß man den Strahl fokussiert, ehe er die Probe erreicht.

5. Verfahren zur automatischen Bestimmung der Wassergüte anhand der Flockungseigenschaft mit dem Zweck, die für die Koagulation eines Ausgangswassers benötigte Menge
an Flockungsmittel zu bestimmen, dadurch gekennzeichnet, daß vor der Wasseraufbereitungsanlage eine Probe des zu behandelnden
Wassers entnommen wird, wobei die Probe
gleichzeitig in abgemessenen reaktiven Mengen
durch ein Koagulierabklärsystem fließt, in dem
die Abklärung der Flocken innerhalb von einigen
Minuten stattfindet, daß man gemäß dem Verfahren nach einem der Ansprüche 1 und 2 das
Volumen der im entflockten Wasser noch aufgeschwemmten, eine Durchschnittsgröße von
10 $\mu$m nicht erreichenden Restteilchen kontinuierlich durch optische Beugung der Teilchen
unter Anwendung eines Laserstrahls mißt, und
daß das elektrische Ausgangssignal der fotoelektrischen Zellen in direkter Beziehung zu dem
Teilchenvolumen steht, das man mit Eichkurven vergleicht.

6. Verfahren nach Anspruch 1, dadurch gekennzeichnet, daß die automatische Vorrichtung, die das Ausgangswasser von der Speiseleitung einer Wasseraufbereitungsanlage abzweigt, zur Bestimmung der Wassergüte

a) ein Koagulierabklärsystem, das aus mindestens einer mit Ausgangswasser und mit
Flockungsmittel gespeisten Rohrschlange und
aus einem Lamellenabklärer besteht; sowie

b) ein Laserdiffraktometer umfaßt

und daß Einrichtungen vorhanden sind, die
kontinuierlich der abgeklärten Flüssigkeit eine
Probe entnehmen, sie in das Diffraktometer
fließen lassen und die sich ergebenden elektrischen Signale aufnehmen, wobei gemäß der
auf diese Weise bestimmten momentanen genauen Dosierung das Flockungsmittel in die
Speiseleitung eingeführt wird.

7. Verfahren nach Anspruch 6, dadurch gekennzeichnet, daß die Koagulierabkläreinrichtung mindestens drei in parallel geschaltete
Aggregate umfaßt, die jeweils mit einer bestimmten Dosierung des Flockungsmittels arbeiten, um für eine ausreichende Meßpunktzahl
Kurven zeichnen zu können, die die genaue Beziehung zwischen dem Lasersignal und der
Dosierung des Koaguliermittels angeben.

**Claims**

1. Process of measuring, by photoelectric
cells, volume of materials in suspension in a
liquid and of which the average diameter (d) of
particles is less than ten microns, by passing
through the liquid a laser light beam diffracted
upon exit from the sample in at least two
windows, the process being characterized in
that the maximum value of angle of diffraction s
for the window closest to the central ray is
satisfying, for a helium-neon gas laser, the
relation: $s = 0.8/d$ (s in radian and d in microns);
the electric signals F and F', from the photoelectric cells being then balanced and added up
to give a last signal proportional to the volume V
of materials in suspension, according the
relation: $V_d = aF + a'F'$, a and a' being the
balancing factors of said signals.

2. Process according claim 1, characterized
in that the said liquid is flowing continuously between two transparent strips and periodically
measuring the diffraction attributable to the
strips, this diffraction being used to rectify the
obtained value.

3. Process in accordance with any of the
claims 1 and 2, characterized in that a monochromatic filter permeable only to the laser light
is disposed in front of the photoelectric cells.

4. Process in accordance with any of the
claims 1 to 3, characterized in that the laser
light is focused before passing it through the
sample.

5. Process for determining automatically the
quality of water by measurement of its suspect-
ability flocculation with a view to the fixing the
precisely necessary amounts of a flocculating
agent to be used to obtain coagulation of a raw
water, the determination being characterized in
that there is first taken, upstream from a purification station a continuous sample of the raw
water to be treated, making the raw water to
be treated pass, simultaneously with closed
amounts of at least one flocculating agent into
at least one coagulation-settling system where
settling of flocs is effected in a few minutes,
then it is measured continuously, according any
of the claims 1 to 4, the volume of residually
particles in suspension in water separated from
flocs and having an average diameter less than
10 microns, by means of optical diffraction by
the said particles of laser light, the electric
signal from the said photoelectric cells being in
direct relation with the volume of particles
which is compared with standard curves.

6. Process in accordance with claim 5,
characterized in that the apparatus, used for
automatically determining the quality of water
and positioned in tap on raw water circuit of
a purification station comprises: a) one
coagulation-settling system constituted by at
least a unity of a coiled pipe, supplied with raw
water and flocculating agent and of lamellar
settling tank; and b) one laser diffractometer;
means being provided for taking off continuously the decanted liquid then conducting it
through the diffractometer and recording the
obtained electric signals, the accurate amount
of flocculating agent so calculated at every
moment being introduced in feeding circuit.

7. Process in accordance with claim 6,
characterized in that the coagulation-settling
system comprises at least three of said unities
positioned in parallel each of which functions
with a determined dose of flocculating agent to
be able to plot, with various measuring points,
the curves establishing the relation between the
laser signal and the flocculating agent dose
which has to be exactly introduced.

**Fig. 1**

**Fig. 2**

0 013 247

*Fig. 3*

*Fig. 4*

Fig. 5